(19) Europäisches Patentamt / European Patent Office / Office européen des brevets

(11) **EP 2 650 836 A1**

(12) **EUROPEAN PATENT APPLICATION**

(43) Date of publication:
**16.10.2013 Bulletin 2013/42**

(51) Int Cl.:
***G06Q 30/02*** *(2012.01)*

(21) Application number: **13162897.6**

(22) Date of filing: **09.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.04.2012 TW 101112627**

(71) Applicant: **A Big Company Marketing Co. Ltd.**
**Taipei City 11551 (TW)**

(72) Inventor: **Chiu, Jiun-Nan**
**11551 Taipei City (TW)**

(74) Representative: **Altenburg, Bernardus Stephanus Franciscus**
**Altenburg Patent**
**Ravelijnstraat 125**
**4102 AJ Culemborg (NL)**

(54) **Method for managing bonuses and service server thereof**

(57)    A method for managing bonuses is disclosed. The method for managing bonuses is executed by a bonus service sever (1) and includes the following steps: providing a bonus management database (23) which records a bonus of at least one member; calculating a bonus interest according to the bonus to generate an updated bonus; storing the updated bonus in the bonus management database (23).

FIG. 1

**Description**

BACKGROUND OF THE INVENTION

1. Field of the Invention

The present invention relates to a method for managing bonuses and a bonus service server thereof, and more particularly, to a method for managing bonuses which can generate a bonus interest and a bonus service server thereof.

2. Description of the Related Art

With growing competition within retail industry, various department stores and shops, in order to attract consumers' attention, not only employ low prices as their marketing practices but also employ member benefits or cumulative activities as a means of establishing a stable consumer base, with the expectation that the promotion activities can attract a stable consumer base.

Currently, most retail industry launch the so- called "accumulated bonus activity", in which customers accumulate bonus points based on the amount of money they spend in the store, and if a certain number of points have been accumulated, the total points can be exchanged for goods designated by the store or redeemed for the spending amount. To illustrate, a department store launches a promotion activity in which one thousand dollars earns one bonus point. If a customer spends ten thousand dollars in the store, he/she would earn ten bonus points. After the bonus points accumulate to a certain number of points, he/she can exchange the points for goods assigned by the store or redeem the points for store credit; for example, two hundred points can be exchanged for a bottle of shower gel, four hundred points can be exchanged for a box of health food of a certain brand, a number of points can be redeemed for store credit of US$ 1.0, etc.

However, the accumulated bonus activities are currently initiated by different stores independently, and the bonus points of each store cannot be used in other stores. In other words, the bonus points accumulated in Company A cannot be exchanged for goods or redeemed for store credit in Company B, and the accumulated bonus points can only be applied to the exchange goods designated by the store, which causes inconvenience to consumers.

Since most department stores and retail shops have time restrictions on validity of bonus points, consumers are often unable to accumulate a certain number of points to exchange for goods or redeem as store credit, which often leads to the condition that the bonus points expire and the total number of points is reset to zero. This can be considered a waste of resources.

Therefore, it is necessary to devise a method for managing bonuses and a platform thereof for users (consumers) to flexibly use their accumulated bonus points, and for providing the users (consumers) with diversified bonus management services.

SUMMARY OF THE INVENTION

It is a major objective of the present invention to provide a method for managing bonuses.

It is another objective of the present invention to provide a bonus service server.

In order to achieve the aforementioned objective, a method for managing bonuses of the present invention is executed by a bonus service server. The method includes the following steps: providing a bonus management database which records a bonus of at least one member; calculating a bonus interest according to the bonus; generating an updated bonus by adding up the bonus and the bonus interest; and storing the updated bonus in the bonus management database.

In order to achieve another aforementioned objective, the bonus service server of the present invention includes a bonus management database, a bonus interest module, and a bonus deposit/withdrawal module. The bonus management database is used for recording a bonus of at least one member; the bonus interest module is used for calculating a bonus interest according to the bonus and generating an updated bonus by adding up the bonus and the bonus interest; and the bonus deposit/withdrawal module is used for storing the updated bonus in the bonus management database.

BRIEF DESCRIPTION OF THE DRAWINGS

The exemplary embodiment(s) of the present invention will be understood more fully from the detailed description given below and from the accompanying drawings of various embodiments of the invention, which, however, should not be taken to limit the invention to  the specific embodiments, but are for explanation and understanding only.

FIG. 1 is an architecture diagram showing a bonus service server of the present invention;

FIG. 2 is a view illustrating each module configured in a form of software program in the present invention;

FIG. 3 is a flow chart illustrating the steps of storing bonuses executed by the bonus service server of the present invention;

FIG. 4 is a view illustrating the member information stored by a member database of the present invention;

FIG. 5 is a view illustrating the exchange rate information stored by an exchange database of the present invention;

FIG. 6A is a view illustrating a bonus account of a member;

FIG. 6B is a view illustrating a bonus account of another member;

FIG. 7 is a flow chart illustrating the steps of calculating interest executed by the bonus service server of the present invention; and

FIG. 8 is a flow chart illustrating the steps of trading bonuses executed by the bonus service server of the present invention.

## DETAILED DESCRIPTION OF THE PREFERRED EMBODIMENT

The technical content of the present invention will become more apparent from the following detailed description of a preferred embodiment.

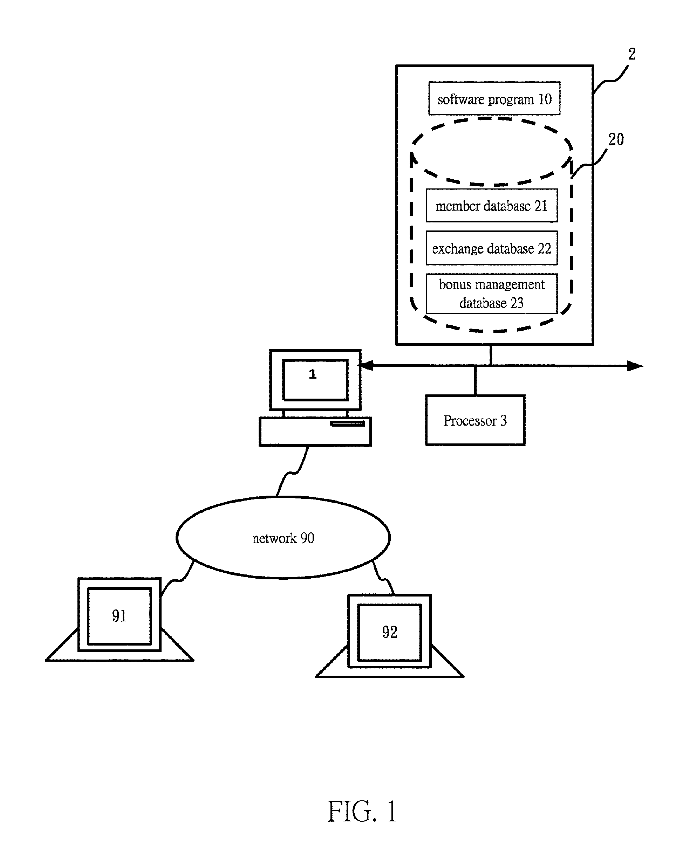

Please refer to both FIGS. 1 to 2 with regard to the schematic diagram of a bonus service server 1 of the present invention.

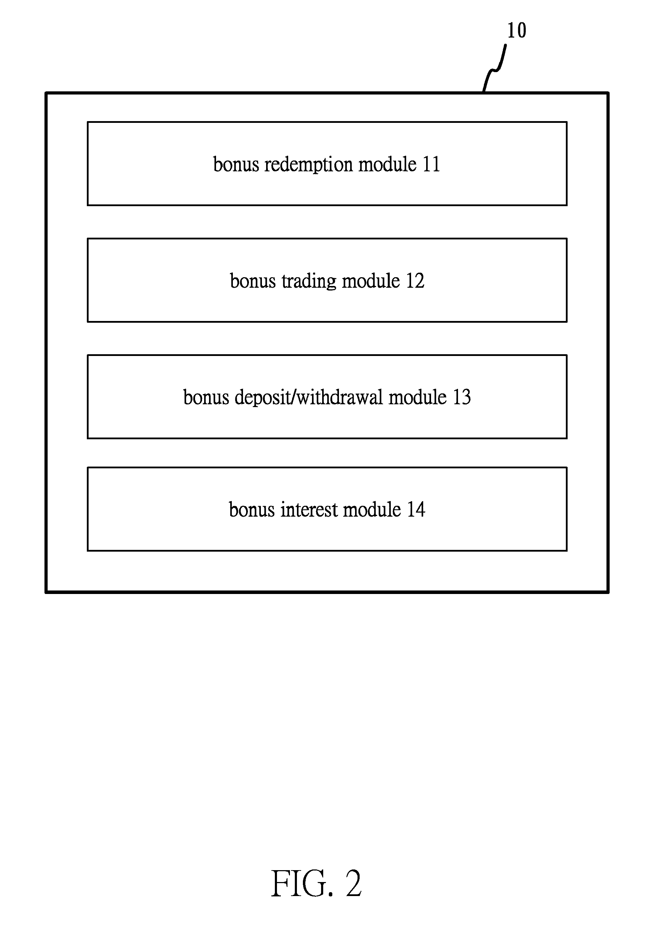

As shown in FIG. 1, the bonus service server 1 of the present invention is connected with user computers 91, 92 via a network 90. In a specific embodiment of the present invention, the bonus service server 1 includes a memory 2 and a processor 3, wherein the memory 2 contains a software program 10 and a database 20, and the processor 3 can execute the software program 10 to implement the method for managing bonuses of the present invention. As shown in FIG. 2, in an embodiment of the present invention, the software program 10 of the present invention includes a bonus redemption module 11, a bonus trading module 12, a bonus deposit/withdrawal module 13, and a bonus interest module 14. The database 20 includes a member database 21 for storing member information, an exchange database 22 for recording the exchange rate information, and a bonus management database 23 for storing the bonus account information of each member.

It should be noted that in the specific embodiment of the present invention, although the bonus redemption module 11, bonus trading module 12, bonus deposit/withdrawal module 13, and bonus interest module 14 are configured in the form of a software program 10, the present invention is not limited to this. Each module can be configured as a hardware device, firmware, or a combination thereof, or configured in a form of circuit loops or other suitable configuration. In addition, the present embodiment only exemplarily illustrates the preferred embodiment of the present invention. To avoid redundancy, all the possible combinations of changes are not described in detail. However, those having ordinary skills in the art should understand that each of the above-mentioned modules or components is not necessarily required. It is also possible to comprise other detailed conventional modules or components. Each module or component is likely to be omitted or modified as needed. Also, there are likely to be other modules or components between any two modules.

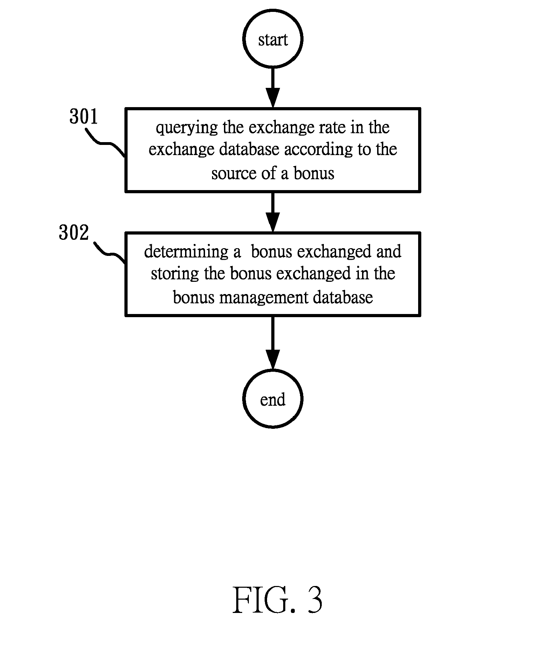

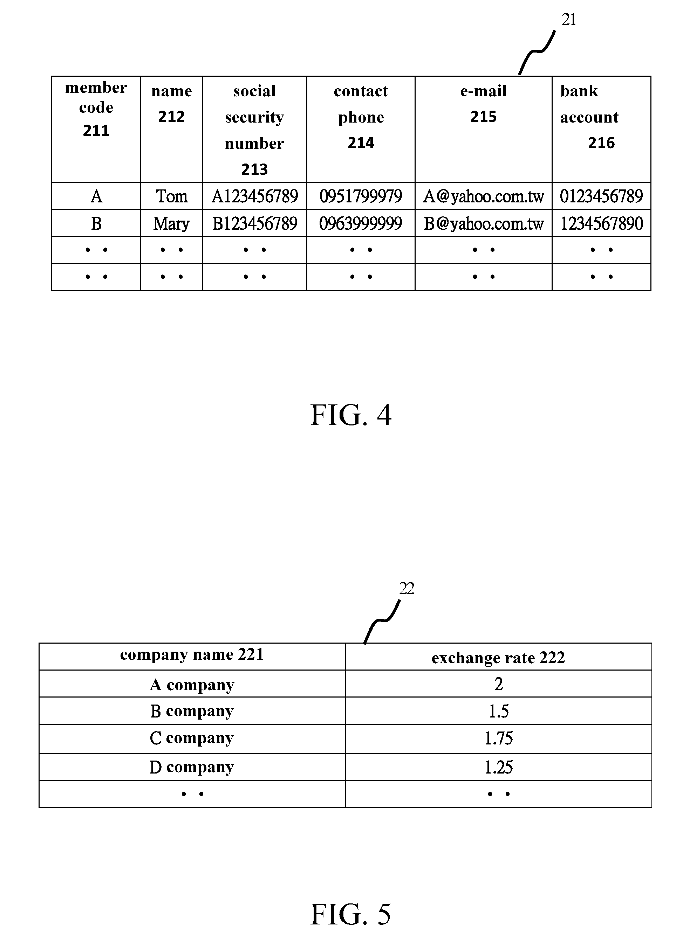

Please continue to refer to FIG. 1, and also refer to FIGS. 3 to 6A, wherein FIG. 3 is a flow chart illustrating the steps of storing the bonus executed by the bonus service server of the present invention. The steps of storing the bonus will be described in order hereinafter, accompanied with FIGS. 4 to 6A.

First, perform Step 301: querying the exchange rate in the exchange database 22 according to the source of a bonus.

After the user computers 91, 92 are connected to the bonus service server 1 of the present invention and member data is entered, the member can start to use various services provided by the present invention, and the member data entered by each member will be stored in a member database 21. As shown in FIG. 4, in the specific embodiment of the present invention, the member database 21 of the present invention includes a member code field 211, a name field 212, an social security number field 213, a contact phone field 214, an e-mail field 215, and a bank account field 216, but the member database 21 of the present invention is not limited to this. After becoming a member, once the member spends and obtains bonuses in a store cooperating with the provider of the bonus service server 1 of the present invention, the bonuses can be stored in the bonus service server 1.

Since the bonus exchange rates of each store may be inconsistent, and the conditions for cooperation between the server provider and each stores may not be the same, the bonus service server 1 of the present invention can have different exchange rates according to the different sources of the bonus points. As shown in FIG. 5, in a specific embodiment of the present invention, all the exchange rate information of each store will be uniformly stored in the exchange database 22, in which the content of the exchange database 22 includes a company name field 221 and an exchange rate field 222 corresponding to the company, but the exchange rate information of the present invention is not only limited to this. Accordingly, once a user stores the bonuses of a department store or a shop in the bonus management database 23, the bonus redemption module 11 will query the exchange rate 222 in the exchange database 22 according to the source of the bonuses to perform the next step.

Perform Step 302: determining a bonus exchanged and storing the bonus exchanged in the bonus management database 23.

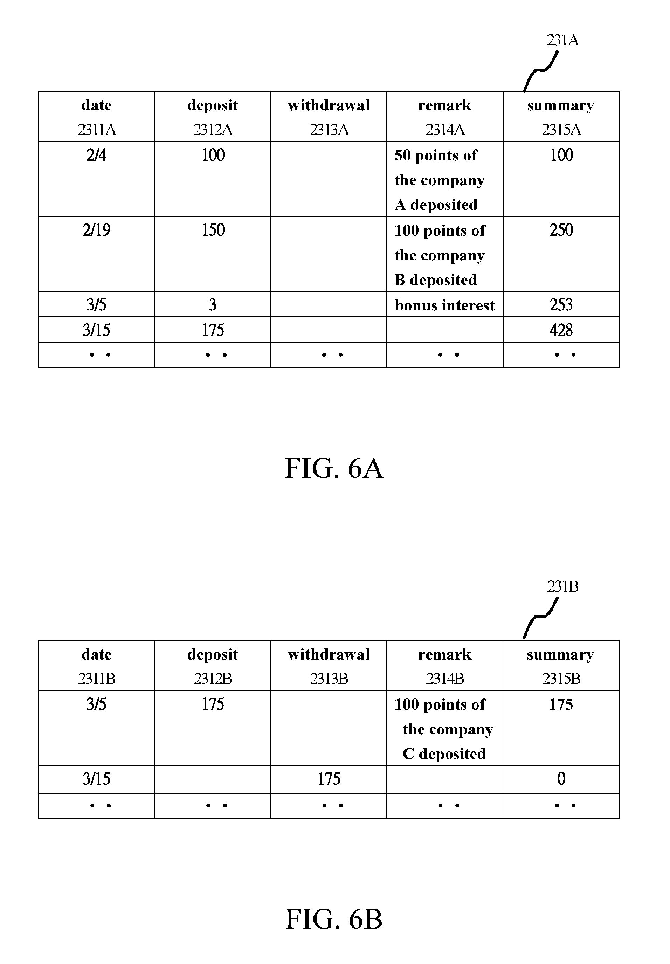

FIG. 6A shows the bonus account information 231A of one member. In the specific embodiment of the present invention, the content of the bonus account information 231A includes a date field 2311A, a deposit field 2312A, a withdrawal field 2313A, a remark field 2314A, and a summary field 2315A, but the present invention is not limited to this.

Assuming the member stores 50 points of Company A in the bonus service server 1 on Feb. 4, then at that time, the bonus redemption module 11 will determine a bonus to store according to the exchange rate of the source of the bonus points, and store the bonus (100 points in this case) in the bonus management database 23. Meanwhile, the processor 3 will update the bonus account information 231A of the member. The updated bonus account information 231A will show the deposit date (2/4) and the deposited value (100 points) of the bonus with the remark of the source of the bonus and the original value of the bonus (50 points of the Company A are deposited), and the closing value after the deposit (100 points).

Further assuming the member also stores 100 points of Company B in the bonus service server on Feb. 19 of the same year, the 100 points will be stored in the bonus management database 23 in accordance with the exchange rate (i.e. 100*1.5=150). At this time, the summary field 2315A of the bonus account information 231A will display the total point value including the previously accumulated points and the deposited points (i.e., 100+150=250 points).

In the specific embodiment of the present invention, when a user stores the obtained bonus in the bonus management database 23, the user can start to use the deposited bonus to purchase goods on a shopping auction site provided by the bonus service server 1 of the present invention, but the deposited bonus in the present invention is not limited to being used on the shopping auction site mentioned above. The bonus can be exchanged with the goods provided by certain stores cooperating with the server provider (e.g. a number of cooperative department stores) or redeemed for store credit.

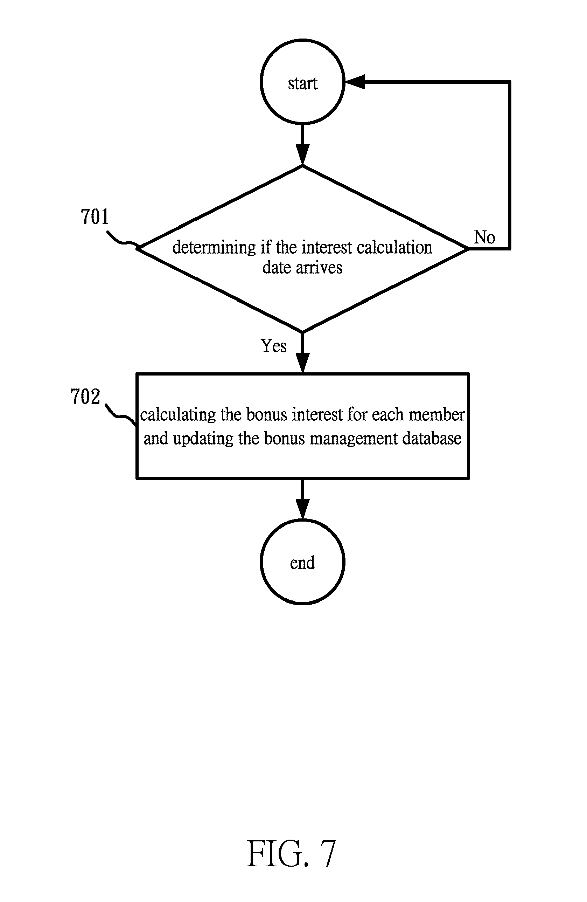

Please refer to FIG. 7, which is a flow chart illustrating the steps of determining the interest performed by the bonus service server of the present invention. Each step illustrating in FIG. 7 will be described thereinafter, accompanied with FIGS. 4 to 6A.

First, perform Step 701: determining if the interest calculation date arrives.

In order for consumers to take advantage of the platform of the present invention, the bonus saved in the bonus management database 23 of the present invention by each member can be increased periodically at a constant interest rate. The interest rate and calculation method can be decided by the server provider, e.g. 10% per year or a monthly interest rate of 2%. Assuming a monthly interest rate of 2%, the server provider can set a constant date (or time) of each month as the interest calculation date (assumed to be the 5th of each month). Once the interest calculation date is set, the bonus interest module 14 will determine whether it needs to calculate bonus interest based on whether it is the interest calculation date or not.

Perform Step 702: calculating the bonus interest for each member and updating the bonus management database 23.

Once it is the bonus interest calculation date, the bonus interest module 14 will calculate the bonus interest for each member and updates the bonus management database 23 (that is, updates the bonus account information for each member). For example, as shown in FIG. 6A, if a member stores 100 points on Feb. 4th, and stores 150 points on Feb. 19th, on the 5th of the following month (i.e., Mar. 5), the bonus interest module 14 will calculate how many bonus points of interest that the member can have for that month according to the interest rate and the number of days the bonus points have been stored. In the specific embodiment of the present invention, the rules of interest calculation by the bonus interest module 14 of the present invention are based on the following, but the method to calculate the bonus interest of the present invention is not limited to thils.. Interest rate is 2%, compounded monthly

2. Calculated on the basis of 30 days monthly; a full 30 days are regarded as a month; those less than 30 days are calculated on the basis of a ratio.

3. The deposit starting date is not included in the calculation.

Accordingly, the interest which the member mentioned above can obtain on Mar. 5 shall be:

```
100 * 2% * (30/30) + 150 * 2% * (10/30) = 3 (points)
```

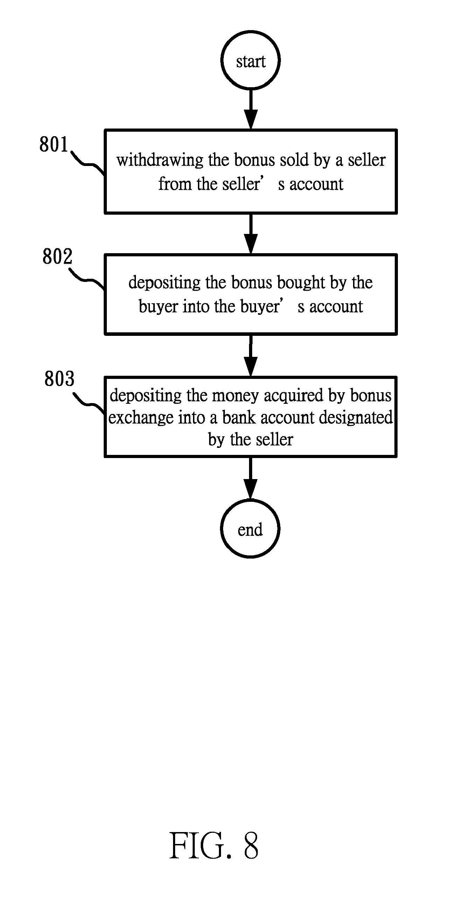

Finally, please refer to FIG. 8, which is a flow chart showing the steps of trading bonuses performed by the bonus service server of the present invention. Also refer to both FIGS. 6A and 6B.

In addition to the bonus interest service, the bonus service server 1 of the present invention allows bonus trading between many members through the server platform of the present invention. FIG. 8 presents a flow chart showing the steps of trading the bonus points. The procedure of trading the bonus points will be described hereinafter in conjunction with FIGS. 6A and 6B.

First, perform Step 801: withdrawing the bonus sold by a seller from the seller's account.

When spending at a department store and obtaining bonuses, a member may not want to exchange the bonus for specified goods or store credit; instead, the member may want to be able to exchange the bonus for cash. Therefore, the bonus service server 1 of the present invention provides the bonus transaction service. FIG. 6B shows the bonus account information 231B of another member. Assuming the member obtains 100 points when spending at a department store, if the member neither wants to exchange the goods specified by the store nor continues to accumulate the bonuses of the store, the member can first store the bonuses in the bonus service server 1 of the present invention and then try to trade these bonus with other members through the server. In the specific embodiment of the present invention, the bonus service server 1 enables the seller to post bonus trading information on a website through the network, such that members can be informed of the bonus trading information. The content of the trading information can include the following items, but the present invention is not limited to this.

1. Seller's member ID
2. How many bonus points to sell
3. Seller's contact
4. Validity period of trading information
5. How much to sell

Once other members browse the trading information and show interest in purchasing these bonuses, the members can click on the trading information to begin bonus trading. After starting the transaction and completing remittance, the bonus trading module 12 will withdraw the bonus sold by the seller from the seller's bonus account and update the bonus management database 23. At this time, the withdrawal field 2313B of the seller's bonus account information 231B will display that the information about the bonus has been withdrawn (as shown in FIG. 6B). Since the embodiment of posting the trading information and clicking to begin trading by a buyer is similar to the other current trading modes of auction websites, it will not be described in detail hereinafter.

Perform Step 802: depositing the bonus bought by the buyer into the buyer's account.

After withdrawing the bonus sold by a seller, the bonus trading module 12 will deposit the bonus bought by the buyer (i.e. the bonus sold by the seller) into the buyer's account and update the buyer's bonus account information 231A (as shown in FIG. 6A).

Perform Step 803: depositing the money acquired by bonus exchange into a bank account designated by the seller.

After the step described above is completed, the bonus service server 1 deposits the amount given by the buyer into a bank account assigned by the seller. The assigned bank account is the account that the member has previously entered in the aforementioned bank account field 216.

It is noteworthy that the sequence of procedures is not limited to what is described above. As long as the purpose of the present invention proposed can be achieved, the sequence of procedures is subject to modification.

The method for managing bonuses and the bonus service server thereof of the present invention not only integrates the bonuses for people in different businesses but enables the stored bonuses to generate bonus interest periodically, and provides for bonus transactions between members. This not only allows cumulative use of bonuses issued by different businesses (for the exchange of goods, spending deductible, and disposal of realizable) but also provides a diverse bonus service that allows more efficiency and convenience for consumers to use bonus points accumulated by the consumer.

As described above, the objectives, means, and effectiveness of the present invention are different from the characteristics in the prior art. It will be appreciated if the patent application can be processed as quickly as possible to benefit society. It should also be noted that the embodiments described above are for illustrative purposes; the disclosed claims of the present invention should be within the range of the accompanying claims and should not be limited to the aforementioned embodiments.

**Claims**

**1.** A method for managing bonuses executed by a bonus service server (1), the method comprising:

providing a bonus management database (23) which records a bonus of at least one member;
calculating a bonus interest according to the bonus;
generating an updated bonus by adding up the bonus and the bonus interest; and

storing the updated bonus in the bonus management database (23).

2. The method for managing bonuses as claimed in Claim 1, wherein the calculation of the bonus interest is based on a predetermined time.

3. The method for managing bonuses as claimed in Claim 1, further comprising:

   providing a bonus redemption module (11) which allows members to store bonuses from different sources to calculate the bonus.

4. The method for managing bonuses as claimed in Claim 1, further comprising:

   providing an exchange database (22) to record the exchange rate for the bonuses from different sources.

5. The method for managing bonuses as claimed in Claim 1, further comprising:

   providing a bonus trading module (12), which allows trade of the bonus among members.

6. A bonus service server (1), comprising:

   a bonus management database (23), which records a bonus of at least one member;
   a bonus interest module (14) used for determining a bonus interest according to the bonus and generating an updated bonus by adding up the bonus and the bonus interest; and
   a bonus deposit/withdrawal module (13) for storing the updated bonus in the bonus management database (23).

7. The bonus service server (1) as claimed in Claim 6, wherein the calculation of the bonus interest is based on a predetermined time.

8. The bonus service server (1) as claimed in Claim 6, further comprising a bonus redemption module (11), which allows the member to store bonuses from different sources to calculate the bonus.

9. The bonus service server (1) as claimed in Claim 6, further comprising an exchange database (22) for recording the exchange rates of the bonuses from different sources.

10. The bonus service server (1) as claimed in Claim 6, further comprising a bonus trading module (12), which allows trade of the bonus among members.

FIG. 1

10

| bonus redemption module 11 |
| bonus trading module 12 |
| bonus deposit/withdrawal module 13 |
| bonus interest module 14 |

# FIG. 2

start

301 querying the exchange rate in the exchange database according to the source of a bonus

302 determining a bonus exchanged and storing the bonus exchanged in the bonus management database

end

FIG. 3

21

| member code 211 | name 212 | social security number 213 | contact phone 214 | e-mail 215 | bank account 216 |
|---|---|---|---|---|---|
| A | Tom | A123456789 | 0951799979 | A@yahoo.com.tw | 0123456789 |
| B | Mary | B123456789 | 0963999999 | B@yahoo.com.tw | 1234567890 |
| . . | . . | . . | . . | . . | . . |
| . . | . . | . . | . . | . . | . . |

FIG. 4

22

| company name 221 | exchange rate 222 |
|---|---|
| A company | 2 |
| B company | 1.5 |
| C company | 1.75 |
| D company | 1.25 |
| . . | . . |

FIG. 5

231A

| date 2311A | deposit 2312A | withdrawal 2313A | remark 2314A | summary 2315A |
|---|---|---|---|---|
| 2/4 | 100 | | 50 points of the company A deposited | 100 |
| 2/19 | 150 | | 100 points of the company B deposited | 250 |
| 3/5 | 3 | | bonus interest | 253 |
| 3/15 | 175 | | | 428 |
| . . | . . | . . | . . | . . |

## FIG. 6A

231B

| date 2311B | deposit 2312B | withdrawal 2313B | remark 2314B | summary 2315B |
|---|---|---|---|---|
| 3/5 | 175 | | 100 points of the company C deposited | 175 |
| 3/15 | | 175 | | 0 |
| . . | . . | . . | . . | . . |

## FIG. 6B

701 — determining if the interest calculation date arrives

702 — calculating the bonus interest for each member and updating the bonus management database

FIG. 7

801 — withdrawing the bonus sold by a seller from the seller's account

802 — depositing the bonus bought by the buyer into the buyer's account

803 — depositing the money acquired by bonus exchange into a bank account designated by the seller

start

end

FIG. 8

**EP 2 650 836 A1**

Europäisches
Patentamt

European
Patent Office

Office européen
des brevets

**EUROPEAN SEARCH REPORT**

Application Number

EP 13 16 2897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-10 | INV. G06Q30/02 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 4 June 2013 | Lutz, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

14

Europäisches
Patentamt

European
Patent Office

Office européen
des brevets

**EUROPEAN SEARCH REPORT**

Application Number

EP 13 16 2897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. * ----- | | |
| | | | TECHNICAL FIELDS SEARCHED (IPC) |

The present search report has been drawn up for all claims

| Place of search | Date of completion of the search | Examiner |
|---|---|---|
| The Hague | 4 June 2013 | Lutz, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)